# EUROPEAN PATENT APPLICATION

(11) **EP 4 709 041 A1**
(43) Date of publication of application: **11.03.2026**
(21) Application number: 24919559.5
(22) Date of filing: 19.04.2024
(51) Int. Cl.: H05B 3/34

(54) **HEATING DIAPHRAGM AND PREPARATION METHOD THEREFOR, HEATING PIPE AND HEATING ELECTRIC APPLIANCE**

(30) Priority: 26.01.2024 CN 202410119770
(71) Applicant: Guangdong Midea Kitchen Appliances Manufacturing Co., Ltd., Foshan, Guangdong 528311 (CN)
(72) Inventor: RAO, Jie, Foshan, Guangdong 528311 (CN); SUN, Yanjun, Foshan, Guangdong 528311 (CN); ZHANG, Zehui, Foshan, Guangdong 528311 (CN); ZHAO, Wenhua, Foshan, Guangdong 528311 (CN); WANG, Cong, Foshan, Guangdong 528311 (CN)
(74) Representative: RGTH
(86) International application number: PCT/CN2024/088967
(87) International publication number: WO 2025/156469

(57) **Abstract**

Provided in the present disclosure are a heating film and a preparation method therefor, a heating tube and a heating appliance. The raw materials of the heating film comprise natural graphite, and the thermal diffusion coefficient of the heating film is 50 m²/s to 450 m²/s.

## Description

### CROSS-REFERENCE TO RELATED APPLICATION

This application claims benefit of a priority of Chinese Patent Application No. 202410119770.1, filed on January 26, 2024, the entire contents of which are incorporated herein by reference.

### FIELD

The present disclosure relates to the field of electric appliance technologies, and more particularly, to a heating film and a method for preparing same, a heating tube, and a heating appliance.

### BACKGROUND

Conventional electric ovens primarily heat food through heating air inside a cavity via a heating tube and directly heating a surface of the food through thermal radiation. Currently, heating appliances on the market, such as electric ovens, microwave ovens, and steam ovens, mainly employ heating elements comprising metallic heating tubes (with a maximum heating temperature ranging from 550°C to 750°C), quartz heating tubes (with a heating filament temperature ranging from 660°C to 800°C), halogen heating tubes (with a maximum heating temperature below 1,000°C), carbon fiber heating tubes (with a maximum heating temperature below 1,000°C), and the like. However, the above heating tubes suffer from drawbacks such as low temperature rise rate within their heating temperature ranges, slow heating, and inadequate maximum temperatures, which results in prolonged cooking time and makes it difficult to obtain food that is crispy on the outside and tender on the inside during heating, causing unsatisfactory user experience.

### SUMMARY

The present disclosure aims to solve at least one of the technical problems in the related art to some extent. To this end, an objective of the present disclosure is to provide a heating film. The heating film has advantages such as high heating temperature, high heating rate, and fast temperature rise.

In an aspect of the present disclosure, the present disclosure provides a heating film. According to an embodiment of the present disclosure, a raw material for the heating film comprises natural graphite. The heating film has thermal diffusivity ranging from 50 m²/s to 450 m²/s, e.g., 50 m²/s, 80 m²/s, 100 m²/s, 130 m²/s, 150 m²/s, 280 m²/s, 300 m²/s, 320 m²/s, 350 m²/s, 370 m²/s, 400 m²/s, and 450m²/s. Thus, the graphite heating film prepared using the natural graphite enables a relatively high heating temperature and a relatively high heating rate, which can help achieve higher-temperature heating and a higher heating efficiency. Moreover, the heating film of the present disclosure is made of the natural graphite, which has large reserves in the earth's minerals. In addition, during preparation of a carbon-based film material, high-temperature graphitization is not required, nor is any additional process needed, allowing for continuous production and reduced costs. Overall, the carbon-based film material offers advantages such as widely available raw materials, simple preparation processes, satisfactory product stability, and ease of adjusting performance parameters as needed, providing significant benefits in reducing product costs, enhancing product reliability, and diversifying product types. If artificial graphite is used instead, an additional process for manufacturing the artificial graphite is required, which substantially increases both manufacturing costs and manufacturing duration of the heating film and reduces a production efficiency. Further, the above thermal diffusivity not only helps improve the heating rate and the heating efficiency of the heating film, but also results in a relatively long service life and relatively high manufacturability of the heating film, i.e., a relatively high production yield and a long service life that meets usage requirements.

According to an embodiment of the present disclosure, the heating film has a flake-like structure, the natural graphite has a flake-like structure, and a flake-like extension plane of the heating film is substantially consistent with a flake-like extension plane of the graphite.

According to an embodiment of the present disclosure, the heating film has a carbon content greater than or equal to 99%.

According to an embodiment of the present disclosure, the heating film has power ranging from 15 W to 10,000 W.

According to an embodiment of the present disclosure, the heating film satisfies at least one of the following conditions: the thermal diffusivity of the heating film ranges from 50 m²/s to 200 m²/s, and the power of the heating film ranges from 15 W to 5,000 W; the thermal diffusivity of the heating film ranges from 200 m²/s to 300 m²/s, and the power of the heating film ranges from 60 W to 7,000 W; or the thermal diffusivity of the heating film ranges from 300 m²/s to 450 m²/s, and the power of the heating film ranges from 100 W to 10,000 W.

According to an embodiment of the present disclosure, the heating film has a heating temperature ranging from 500°C to 1,700°C.

According to an embodiment of the present disclosure, a material of the heating film is graphite.

According to an embodiment of the present disclosure, the heating film comprises a plurality of heating units arranged sequentially in a length direction, adjacent heating units being arranged at an interval from each other and connected by a connection segment.

According to an embodiment of the present disclosure, each of the plurality of heating units has a hollowed-out hole.

According to an embodiment of the present disclosure, the heating film comprises a first heating segment and a second heating segment adjacent to each other in the length direction. The first heating segment comprises multiple heating units connected to each other, and the second heating segment comprises multiple heating units adjacent to each other. A dimension of the multiple heating units corresponding to the first heating segment is smaller than a dimension of the multiple heating units corresponding to the second heating segment; and/or the first heating segment and the second heating segment are arranged offset from each other in a width direction of the heating film.

According to an embodiment of the present disclosure, the heating film has a plurality of notches arranged at an interval in the length direction.

According to an embodiment of the present disclosure, each of the plurality of notches is defined through separating a part of the heating film from the remaining part of the heating film and bending the part of the heating film.

In another aspect of the present disclosure, the present disclosure provides a method for preparing the heating film as described above. According to an embodiment of the present disclosure, the method for preparing the heating film comprises: providing natural graphite, and performing an intercalation treatment on the natural graphite to obtain expandable graphite; performing an expansion treatment on the expandable graphite to obtain expanded graphite; and performing calendaring and cutting on the expanded graphite to obtain the heating film. Thus, the graphite heating film prepared using the natural graphite enables the relatively high heating temperature and the relatively high heating rate, which can help achieve the higher-temperature heating and the higher heating efficiency. Moreover, the heating film of the present disclosure is made of the natural graphite, which has large reserves in the earth's minerals. In addition, during the preparation of the carbon-based film material, the high-temperature graphitization is not required, nor is any additional process needed, allowing for the continuous production and reduced costs. Overall, the carbon-based film material offers advantages such as widely available raw materials, simple preparation processes, satisfactory product stability, and ease of adjusting performance parameters as needed, providing significant benefits in reducing product costs, enhancing product reliability, and diversifying product types. If the artificial graphite is used instead, the additional process for manufacturing the artificial graphite is required, which substantially increases both the manufacturing costs and the manufacturing duration of the heating film and reduces the production efficiency.

According to an embodiment of the present disclosure, the intercalation treatment is implemented by: performing intercalation on the natural graphite using a concentrated sulfuric acid and/or a hydrogen peroxide to obtain the expandable graphite. The expansion treatment is implemented by: introducing the expandable graphite into an expansion furnace and allowing the expandable graphite to expand at a temperature ranging from 850°C to 1,200°C to obtain the worm-like expanded graphite.

In yet another aspect of the present disclosure, the present disclosure provides a heating tube. According to an embodiment of the present disclosure, the heating tube comprises the above heating film. Thus, the heating tube achieves a relatively high heating temperature, a relatively high temperature rise rate, and a relatively concentrated heating region, significantly enhancing a heating efficiency of the heating tube. Those skilled in the art should understand that the heating tube possesses all the features and advantages of the above heating film, and thus details thereof will be omitted here.

In still yet another aspect of the present disclosure, the present disclosure provides a heating appliance. According to an embodiment of the present disclosure, the heating appliance comprises the above heating tube. Thus, the heating appliance achieves a relatively high heating temperature, a relatively high temperature rise rate, and a relatively concentrated heating region, significantly enhancing a heating efficiency of the heating appliance.

According to an embodiment of the present disclosure, the heating appliance is an electric oven, a microwave oven, a steam oven, an electric kettle, an electric blanket, an electric heater, an electric warmer, a bath heater, an electric ceramic cooker, or a disinfection cabinet.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic diagram of a curve showing a relationship between thermal diffusivity of a heating film and a wire temperature.
FIG. 2 is a schematic diagram of thermal radiation of a heating film of the present disclosure.
FIG. 3 is a schematic diagram of thermal radiation of a heating tube core in the related art.
FIG. 4 is a schematic diagram of a curve showing a relationship between a heating temperature and a resistance of a heating film of the present disclosure.
FIG. 5 is a schematic structural view of a heating film according to some other embodiments of the present disclosure.
FIG. 6 is a schematic structural view of a heating film according to some other embodiments of the present disclosure.
FIG. 7 is a schematic structural view of a heating film according to some other embodiments of the present disclosure.
FIG. 8 is a schematic structural view of a heating tube according to yet some other embodiments of the present disclosure.
FIG. 9 is a schematic structural view of a heating tube according to yet some other embodiments of the present disclosure.
FIG. 10 is a schematic structural view of a heating tube according to yet some other embodiments of the present disclosure.
FIG. 11 is a schematic structural view of a heating film according to some further embodiments of the present disclosure.

### DETAILED DESCRIPTION OF THE EMBODIMENTS

Solutions of the present disclosure are described below in conjunction with embodiments. Those skilled in the art should understand that the embodiments described below are only used for illustrating the present disclosure and should not be construed as limiting the scope of the present disclosure. Where specific techniques or conditions are not indicated in the embodiments, the procedures shall be carried out in accordance with the techniques or conditions described in the related literature in the field or in accordance with the product specification. The reagents or instruments used without the indication of the manufacturers are all conventional products that can be purchased commercially.

The present disclosure will now be described with reference to specific embodiments. It should be understood that these embodiments are merely illustrative and are not intended to limit the present disclosure in any way.

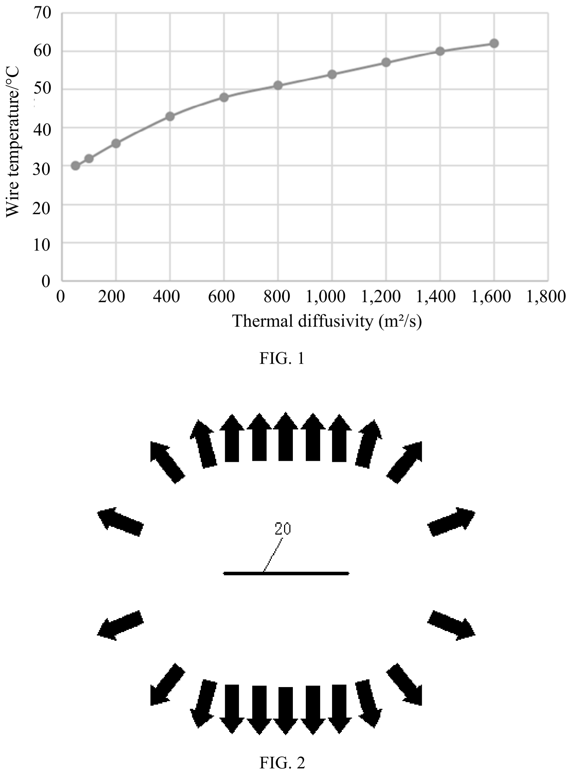

Thermal diffusivity is a measure of a rate at which a temperature disturbance at one point in an object propagates to another point. In the event that the thermal diffusivity becomes relatively greater, a rate of heat conduction becomes relatively higher. Each of connection terminals at two ends of a heating tube is connected to a wire. If thermal diffusivity of a heating film is high, a rate at which heat is conducted to the two ends during continuous operation and heating of the heating film is high, leading to two adverse effects: 1) a wire temperature increases as thermal shock experienced by the connection wire becomes greater, as illustrated in FIG. 1; 2) heat applied by the heating film to an object to be heated (such as food) decreases as heat conducted away by the wire increases. Based on this, the present disclosure provides a heating film having suitable thermal diffusivity that can ensure a satisfactory heating rate while improving a heating efficiency.

On this basis, in an aspect of the present disclosure, the present disclosure provides a heating film. According to an embodiment of the present disclosure, a raw material of the heating film comprises natural graphite. The heating film has thermal diffusivity ranging from 50 m²/s to 450 m²/s, e.g., 50 m²/s, 80 m²/s, 100 m²/s, 130 m²/s, 150 m²/s, 280 m²/s, 300 m²/s, 320 m²/s, 350 m²/s, 370 m²/s, 400 m²/s, 420 m²/s, and 450m²/s. Thus, the graphite heating film prepared using the natural graphite enables a relatively high heating temperature and a relatively high heating rate, which can help achieve higher-temperature heating and a higher heating efficiency. Moreover, the heating film of the present disclosure is made of the natural graphite, which has large reserves in the earth's minerals. In addition, during preparation of a carbon-based film material, high-temperature graphitization is not required, nor is any additional process needed, allowing for continuous production and reduced costs. Overall, the carbon-based film material offers advantages such as widely available raw materials, simple preparation processes, satisfactory product stability, and ease of adjusting performance parameters as needed, providing significant benefits in reducing product costs, enhancing product reliability, and diversifying product types. If artificial graphite is used instead, an additional process for manufacturing the artificial graphite is required, which substantially increases both manufacturing costs and manufacturing duration of the heating film and reduces a production efficiency. Further, the above thermal diffusivity is appropriate, which not only helps improve the heating rate and the heating efficiency of the heating film, but also results in a relatively long service life and relatively high manufacturability of the heating film, i.e., a relatively high production yield and a long service life that meets usage requirements.

A principle of how the thermal diffusivity of the present disclosure improves the heating rate and the heating efficiency of the heating film is specifically as follows. The above thermal diffusivity enables heat generated by the heating film to be transferred out of a heating cavity via thermal conduction to a lesser extent, allowing more heat to concentrate on the heating film. Consequently, the heating film attains a higher temperature. According to the Stefan-Boltzmann law, a greater temperature difference results in greater radiant energy, and thus heat is transferred into the heating cavity primarily via radiation, concentrating the heat generated by the heating film mainly onto the object to be heated. In this way, not only can an excellent heating rate be ensured, but also an excessive heat loss due to overly rapid heat transfer can be avoided, improving the heating efficiency. Further, the above thermal diffusivity also helps extend the service life of the heating film. If the thermal diffusivity is smaller than 50 m²/s, too little heat is transferred by the heating film via the thermal conduction, causing a temperature of the heating film to be too high and failing to meet a lifespan requirement. If the thermal diffusivity is greater than 450 m²/s, much heat is transferred via the thermal conduction, resulting in reduced radiant energy and a relatively low heating efficiency of the heating film. Furthermore, higher thermal diffusivity requires the heating film to have a higher density. The density corresponding to the thermal diffusivity greater than 450 m²/s is relatively large, making manufacturing difficult from a process standpoint. In addition, the raw material for the carbon-based heating film of the present disclosure is readily available and low in costs, and does not require a high-temperature graphitization treatment, making the process simpler and safer.

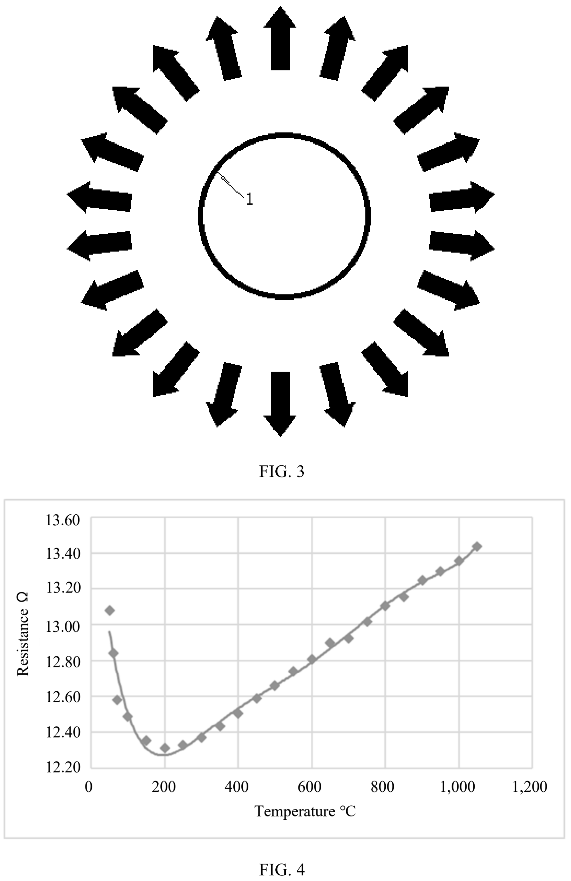

According to some embodiments of the present disclosure, the heating film has a flake-like structure, the raw material graphite used to prepare the heating film also has a flake-like structure, and a flake-like extension plane of the heating film is substantially consistent with a flake-like extension plane of the graphite. Consequently, as illustrated in FIG. 2, when the flake-like structured heating film generates heat, the heat is primarily radiated in a direction perpendicular to a heating surface (i.e., a plane of the film), which results in strong directivity and more concentrated thermal radiation, better improving a heating efficiency and reducing a heat loss. In the related art, as illustrated in FIG. 3, thermal radiation from a heating tube core 1 (e.g., a metallic heating tube core or a quartz tube core) is emitted uniformly in all directions, and thus heat cannot be emitted in a concentrated manner, typically leading to a heat waste and a reduced heating efficiency. Thus, by comparison, a thermal radiation direction of the heating film of the present disclosure is more concentrated, enabling better directed heating of an object to be heated and improving the heating efficiency. It should be noted that the term "substantially consistent" as used above means that the flake-like extension plane of the heating film is generally consistent with the flake-like extension plane of the natural graphite, and does not require that the flake-like extension plane of the heating film is completely identical or completely parallel to the flake-like extension plane of the natural graphite.

According to some embodiments of the present disclosure, as described above, the material of the heating film prepared from the raw material natural graphite is graphite, which enables the heating film of the present disclosure to have the relatively high heating temperature and the relatively high heating rate. The prepared graphite still has a flake-like structure. In addition, a planar extension direction of the flake-like structure is substantially consistent with a planar extension direction of the raw material natural graphite. That is, the flake-like extension plane of the heating film is substantially consistent with a flake-like extension plane of the material graphite for preparing the heating film.

According to some embodiments of the present disclosure, the heating film satisfies at least one of the following conditions: the heating film has a thickness ranging from 0.04 mm to 2 mm, e.g., the thickness of the heating film may be 0.04 mm, 0.08 mm, 0.2 mm, 0.5 mm, 0.8 mm, 1.0 mm, 1.2 mm, 1.5 mm, 1.8 mm, or 2.0 mm; the heating film has a density ranging from 0.6 g/cm³ to 1.8 g/cm³, e.g., the density of the heating film may be 0.6 g/cm³, 0.8 g/cm³, 1.0 g/cm³, 1.2 g/cm³, 1.4 g/cm³, 1.5 g/cm³, 1.6 g/cm³, or 1.8 g/cm³. Consequently, the heating film having the above density and thicknesses can meet requirements for different power levels of the heating film. That is, both an ultra-high-power heating film and an ultra-low-power heating film can be achieved. In addition, the carbon-based heating film of the present disclosure has high manufacturability, i.e., a high production yield and a long service life.

According to some embodiments of the present disclosure, the heating film has a carbon content greater than or equal to 99%. Thus, the heating film has the relatively high carbon content, i.e., relatively high purity, which is conducive to obtaining the heating film having better performance.

According to some embodiments of the present disclosure, the heating film has power ranging from 15 W to 10,000 W, e.g., 15 W, 20 W, 40 W, 50 W, 70 W, 100 W, 150 W, 300 W, 500 W, 800 W, 1,000 W, 1,500 W, 3,000 W, 4,500 W, 5,000 W, 6,000 W, 7,000 W, 8,000 W, 9,000 W, and 10,000 W. Thus, the heating film of the present disclosure can effectively achieve heating across a relatively wide power range. That is, both ultra-low-power heating and ultra-high-power heating can be achieved, satisfying various power requirements for the heating film under different application conditions.

According to an embodiment of the present disclosure, the heating film satisfies at least one of the following conditions: the thermal diffusivity of the heating film ranges from 50 m²/s to 200 m²/s, and the power of the heating film ranges from 15 W to 5,000 W; the thermal diffusivity of the heating film ranges from 200 m²/s to 300 m²/s, and the power of the heating film ranges from 60 W to 7,000 W; or the thermal diffusivity of the heating film ranges from 300 m²/s to 450 m²/s, and the power of the heating film ranges from 100 W to 10,000 W. Thus, the power of the heating film varies depending on the thermal diffusivity of the heating film at different levels. Therefore, in the present disclosure, the power of the heating film can be adjusted through adjusting the thermal diffusivity of the heating film, enabling heating films having different power levels to be produced so as to meet diverse heating application requirements.

According to some embodiments of the present disclosure, the heating film has a heating temperature ranging from 500°C to 1,700°C. For example, the heating temperature of the heating film may be 500°C, 550°C, 600°C, 700°C, 800°C, 900°C, 1,000°C, 1,100°C, 1,200°C, 1,300°C, 1,400°C, 1,500°C, 1,600°C, or 1,700°C. Thus, the heating temperature of the heating film of the present disclosure can reach 1,700°C at most. Further, those skilled in the art can flexibly adjust a maximum heating temperature of the heating film based on specific application requirements through adjusting parameters such as the density and/or the thickness of the heating film. Consequently, a broad range of heating application requirements is satisfied, enabling production of heating films with various power levels, e.g., an ultra-low-power heating film or an ultra-high-power heating film.

According to some embodiments of the present disclosure, the heating film prepared from the natural graphite also has a self-limiting temperature characteristic. Specifically, as illustrated in FIG. 4, the heating film has a critical temperature. When the temperature of the heating film is below the critical temperature, a resistance of the heating film decreases as the temperature of the heating film increases. When the temperature of the heating film exceeds the critical temperature, the resistance of the heating film increases as the temperature of the heating film increases. Thus, the heating film of the present disclosure has the self-limiting temperature characteristic. Specifically, in an initial stage of heating (i.e., when the temperature of the heating film is below the critical temperature), as the temperature of the heating film increases, the resistance of the heating film decreases, and a current increases, which causes the power of the heating film to increase as the temperature of the heating film increases. Therefore, in this stage, the heating film can heat up rapidly. When the heating temperature of the heating film reaches the critical temperature, as the temperature of the heating film increases, the resistance of the heating film increases, and the current decreases, which causes the power of the heating film to decrease as the temperature of the heating film increases. Therefore, in this stage, a temperature rise rate of the heating film begins to slow down, gradually slowly approaching the maximum heating temperature of the heating film. On the one hand, the above self-limiting temperature characteristic of the heating film enables an acceleration of the heating rate of the heating film in a temperature range below the critical temperature, allowing the heating film to reach a target temperature as quickly as possible. On the other hand, when the temperature of the heating film exceeds the critical temperature, the above self-limiting temperature characteristic of the heating film can mitigate an issue of a fuse failure caused by the continuously rising heating temperature, enhancing reliability and stability of the heating film. It should be noted that, FIG. 4 merely illustrates a temperature-resistance curve diagram of the heating film according to embodiment, but a trend of the curve represents a schematic illustration of a temperature-resistance curve of the heating film of the present disclosure.

In an embodiment of the present disclosure, a specific cutting pattern of the heating film can be diversified. Those skilled in the art can flexibly design the cutting pattern of the heating film based on actual requirements for resistance, power, and the like of the heating film. Several cutting patterns of the heating film are described below according to some specific embodiments of the present disclosure.

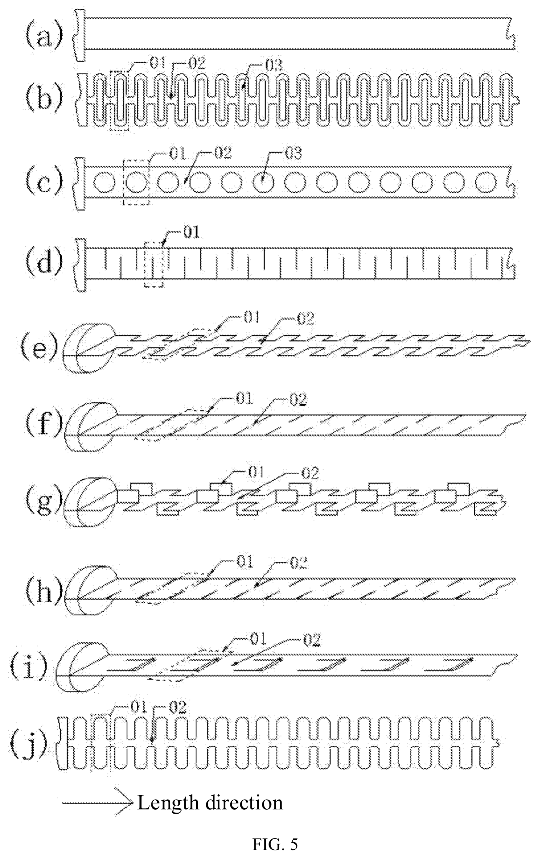

In some embodiments of the present disclosure, as illustrated in FIG. 5, the heating film comprises a plurality of heating units 01 arranged sequentially in a length direction. Adjacent heating units 01 of the plurality of heating units 01 are spaced apart from each other and connected by a connection segments 02. Thus, the heating film of the present disclosure can be cut into structures of various patterns to meet different usage requirements. In some embodiments of the present disclosure, as illustrated in FIG. 5, an outer peripheral wall of the heating unit is formed in an oblong shape or a polygonal shape.

In some embodiments of the present disclosure, as illustrated in the portions (b), (c) and (i) of FIG. 5, each heating unit 01 has a hollowed-out hole 03. Thus, formation of the hollowed-out holes can accelerate a heat dissipation rate of the heating film, thereby increasing the heating rate for the object to be heated.

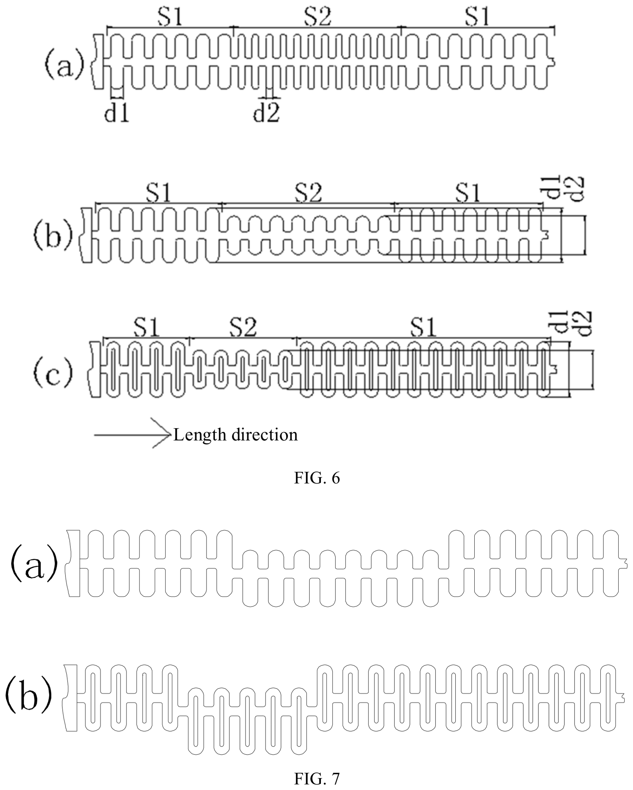

In some embodiments of the present disclosure, as illustrated in FIG. 6, the heating film comprises a first heating segment S2 and a second heating segment S1 adjacent to each other in the length direction. The first heating segment S2 comprises a plurality of heating units 01 connected to each other. The second heating segment S1 comprises a plurality of heating units 01 adjacent to each other. A dimension of each of the plurality of heating units 01 corresponding to the first heating segment S2 is smaller than a dimension of each of the plurality of heating units 01 corresponding to the second heating segment S1. For example, as illustrated in the portion (a) of FIG. 6, the heating unit 01 corresponding to the first heating segment S2 has a same length as the heating unit 01 corresponding to the second heating segment S1, but a width d2 of the heating unit 01 corresponding to the first heating segment S2 is different from a width d1 of the heating unit 01 corresponding to the second heating segment S1, d2 < d1. For example, as illustrated in the portions (b) and (c) of FIG. 6, the heating unit 01 corresponding to the first heating segment S2 has a same width as the heating unit 01 corresponding to the second heating segment S1, but a length d2 of the heating unit 01 corresponding to the first heating segment S2 is different from a length d1 of the heating unit 01 corresponding to the second heating segment S1, where d2<d1. Thus, a structure of the heating film can be diversified.

In some embodiments of the present disclosure, as illustrated in FIG. 7, the first heating segment and the second heating segment are offset from each other in a width direction of the heating film. Thus, the structure of the heating film can be diversified.

In some embodiments of the present disclosure, as illustrated in the portions (d), (e), (f), (h), (i), and (j) of FIG. 5, the heating film has a plurality of notches arranged at intervals in the length direction. Thus, the structure of the heating film can be diversified. Further, in some embodiments of the present disclosure, as illustrated in the portion (i) of FIG. 5, each notch is defined through separating a part of the heating film from the remaining part of the heating film and bending the part of the heating film.

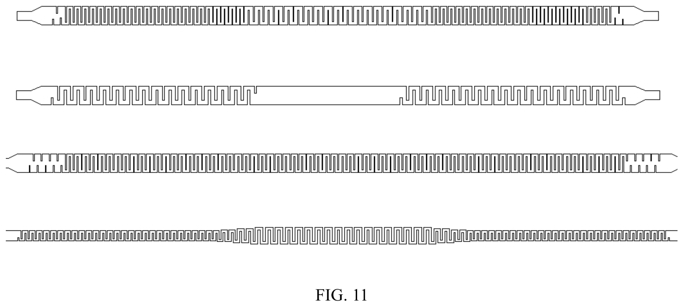

In some embodiments, as illustrated in FIG. 11, one heating film may comprise a plurality of different cutting patterns, or may comprise one cutting pattern having a nonuniform density distribution.

In another aspect of the present disclosure, the present disclosure provides a method for preparing the above heating film. According to an embodiment of the present disclosure, the method for preparing the heating film can be prepared through using the natural graphite. Specific preparation steps are as follows.

In some embodiments, the method for preparing the heating film using the natural graphite comprises the following steps.

In S100, the natural graphite is provided, and an intercalation treatment is performed on the natural graphite to obtain an expandable graphite (graphite oxide).

In the present disclosure, the natural graphite is used, which does not require any additional process for preparation of the natural graphite, further reducing processes for preparing the heating film and reducing costs. If the artificial graphite is used instead, the additional process for manufacturing the artificial graphite is required, which substantially increases both the manufacturing costs and the manufacturing duration of the heating film and reduces the production efficiency. In addition, using natural flake graphite, whose single-layer structure exhibits a layered arrangement, enables the graphite within the prepared heating film to also exhibit a layered arrangement, enhancing concentrated heating performance of the heating film. Additionally, the natural flake graphite is abundant in the earth's mineral reserves. Further, during preparation of the carbon-based heating film material, the high-temperature graphitization is not required, and continuous production is achievable, which can further improve the production efficiency and lower production costs. An elimination of the high-temperature graphitization also improves production safety.

Additionally, the natural flake graphite is abundant in the earth's mineral reserves. Further, during preparation of the heating film material of the present disclosure, the high-temperature graphitization is not required, and the continuous production is achievable, which can further improve the production efficiency and lower the production costs. The elimination of the high-temperature graphitization also improves the production safety.

In some embodiments, a specific method for the intercalation treatment may involve intercalating the natural flake graphite with concentrated sulfuric acid and/or an oxidant such as a hydrogen peroxide to obtain the expandable graphite.

In S200, an expansion treatment is performed on the expandable graphite to obtain expanded graphite.

In some embodiments, after the expandable graphite enters an expansion furnace, the expandable graphite undergoes an instantaneous high temperature, rapidly expanding to form graphite worms, i.e., the expanded graphite. Through the expansion treatment, an expansion ratio of the expandable graphite can reach 30 times to 400 times. During the expansion treatment, an expansion temperature ranges from 850°C to 1,200°C, and an expansion duration ranges from 0.7 s to 1.3 s.

In S300, calendering, a first heat treatment, and cutting are performed on the expanded graphite to obtain the heating film. The heating films with different cutting patterns obtained after the cutting can be referred to in FIG. 5 to FIG. 7 and FIG. 11. Characteristics of specific cutting patterns are consistent with requirements previously described, and thus details thereof will be omitted here.

No special requirements are imposed on a specific method for the first heat treatment. Those skilled in the art can employ a specific heat treatment method known in the art for deoxidizing the expandable graphite to obtain the graphite.

Thus, by performing the calendering on the expanded graphite, parameters such as the thickness, the density, and the thermal diffusivity of the heating film can be controlled. The thickness, the density, and the thermal diffusivity of the heating film have been described above, and thus details thereof will be omitted here.

According to the embodiments of the present disclosure, the above graphite heating film prepared using the natural graphite enables the relatively high heating temperature and the relatively high heating rate, which can help achieve the higher-temperature heating and the higher heating efficiency. Moreover, the heating film of the present disclosure is made of the natural graphite, which has large reserves in the earth's minerals. In addition, during the preparation of the carbon-based film material, the high-temperature graphitization is not required, nor is any additional process needed, allowing for the continuous production and reduced costs. Overall, the carbon-based film material offers advantages such as widely available raw materials, simple preparation processes, satisfactory product stability, and ease of adjusting performance parameters as needed, providing significant benefits in reducing product costs, enhancing product reliability, and diversifying product types. If the artificial graphite is used instead, the additional process for manufacturing the artificial graphite is required, which substantially increases both the manufacturing costs and the manufacturing duration of the heating film and reduces the production efficiency.

In yet another aspect of the present disclosure, the present disclosure provides a heating tube. According to an embodiment of the present disclosure, the heating tube comprises the above heating film. Thus, the heating tube achieves a relatively high heating temperature, a relatively high temperature rise rate, and a relatively concentrated heating region, significantly enhancing a heating efficiency of the heating tube. Those skilled in the art should understand that the heating tube possesses all the features and advantages of the above heating film, and thus details thereof will be omitted here.

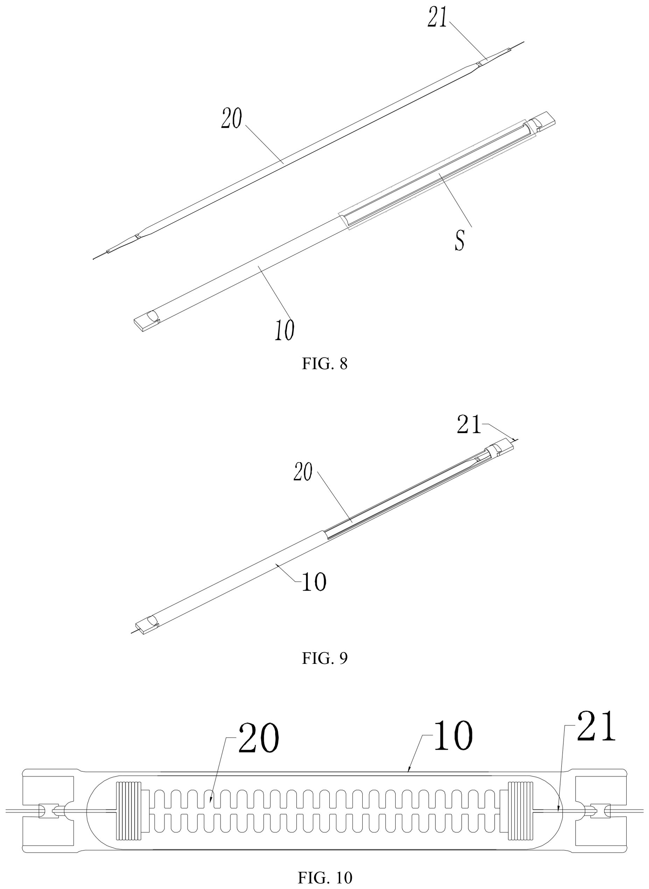

In some embodiments, as illustrated in FIG. 8 (region S in the figure refers to a partial cross-sectional view of a sleeve), FIG. 9, and FIG. 10, the heating tube further comprises a sleeve 10. The heating film 20 is disposed inside the sleeve 10, and is provided with a terminal 21 at each of two ends of the heating film 20. The sleeve may be, for example, a quartz glass sleeve.

In still yet another aspect of the present disclosure, the present disclosure provides a heating appliance. According to an embodiment of the present disclosure, the heating appliance comprises the above heating tube. Thus, the heating appliance achieves a relatively high heating temperature, a relatively high temperature rise rate, and a relatively concentrated heating region, significantly enhancing a heating efficiency of the heating appliance.

According to an embodiment of the present disclosure, the heating appliance is an electric oven, a microwave oven, a steam oven, an electric kettle, an electric blanket, an electric heater, an electric warmer, a bath heater, an electric ceramic cooker, or a disinfection cabinet.

Those skilled in the art should understand that, in addition to the above heating tube, the heating appliance further comprises structures or components essential to the heating appliance. As an example, in the electric oven, in addition to the above heating tube, essential structures or components such as a housing, a heating space, a base, and a plug are also comprised.

### Examples

### Example 1 to Example 9, Comparative Example 1, and Comparative Example 2

The heating film was prepared using the natural flake graphite. The heating film had a length of 600 mm, a width of 8 mm, and a cutting pattern as illustrated in the portion (a) of FIG. 5. Test results of the thermal diffusivity, the service life, and the heating temperature of the heating films from different examples can be found in Table 1 below. The heating film from each example was fabricated into the heating tube. All heating tubes were tested at same power of 600 W. Time required for each heating tube to raise a temperature of an oven to 200°C was measured. Test results are shown in Table 1. A halogen tube, a quartz tube, and a metallic tube were respectively applied in one oven. All heating tubes were tested at same power of 600 W. Time required for each heating tube to raise a temperature of the oven to 200°C was measured. Test results are shown in Table 2.

The above service life was tested as follows: a voltage of 1.1 times a rated voltage was applied to the heating film. After continuous operation for 525 hours, the following criteria had to be satisfied: (1) the heating tube showed no cracks, no breaks, or no deformations; (2) the heating film exhibited no breakage or bending deformation, and a power deviation met requirements specified in design drawings; (3) insulation resistance: measured between a live part (terminal) and a non-live part (tube wall) of the heating tube using an insulation resistance meter at DC 500 V, with a measured resistance ≥500 MΩ (DC 500 V); (4) dielectric strength: a voltage of 1,800VAC/3S/5mA was applied between the live part (terminal) and the non-live part (tube wall) of the heating tube. The service life of the heating film was deemed qualified if no flashover or breakdown occurred.

**Table 1**

| | Thermal diffusivity (m²/s) | Service life | Heating temperature of the heating film/°C | Power of the heating tube (W) | Time (s) |
|---|---|---|---|---|---|
| Example 1 | 50 | Qualified | 856 | 600 | 136 |
| Example 2 | 100 | Qualified | 848 | 600 | 139 |
| Example 3 | 150 | Qualified | 840 | 600 | 132 |
| Example 4 | 200 | Qualified | 834 | 600 | 144 |
| Example 5 | 240 | Qualified | 830 | 600 | 146 |
| Example 6 | 300 | Qualified | 826 | 600 | 149 |
| Example 7 | 350 | Qualified | 822 | 600 | 152 |
| Example 8 | 400 | Qualified | 817 | 600 | 156 |
| Example 9 | 450 | Qualified | 812 | 600 | 159 |
| Comparative Example 1 | 40 | Unqualified | / | 600 | 133 |
| Comparative Example 2 | 470 | Qualified | 810 | 600 | 161 |

**Table 2**

| | Halogen tube | Quartz tube | Metallic tube |
|---|---|---|---|
| Time (s) | 218 | 290 | 279 |

The above test results reveal that, when the thermal diffusivity of the heating film of the present disclosure ranges from 50 m²/s to 450 m²/s, the service life of the heating film can be effectively prolonged, and the heating film exhibits the relatively high heating temperature and the relatively high heating rate. In addition, the heating efficiency of the heating film is relatively high, enabling the heating film to reach the relatively high heating temperature in a short period of time. However, when the thermal diffusivity exceeds 450 m²/s, heating time increases accordingly. Further, the density of the heating film becomes higher, making manufacturing difficult from a process standpoint, i.e., process difficulty is increased.

In the present disclosure, terms "first" and "second" are only used for descriptive purposes, and cannot be understood as indicating or implying relative importance or implicitly indicating the number of indicated technical features. Therefore, the features associated with "first" and "second" may explicitly or implicitly comprise one or more of the features. In the description of the present disclosure, "plurality" means at least two, unless otherwise specifically defined.

Reference throughout this specification to "an embodiment", "some embodiments", "an example", "a specific example", or "some examples" means that a particular feature, structure, material, or characteristic described in connection with the embodiment or example is comprised in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of the present disclosure have been shown and described above, it should be understood that the above embodiments are merely exemplary, and cannot be construed to limit the present disclosure. For those skilled in the art, changes, modifications, alternatives and variant can be made to the embodiments without departing from the scope of the present disclosure.

## Claims

1. A heating film, wherein a raw material for the heating film comprises natural graphite, the heating film having thermal diffusivity ranging from 50 m²/s to 450 m²/s.

2. The heating film according to claim 1, wherein:
the heating film has a flake-like structure;
the natural graphite has a flake-like structure; and
a flake-like extension plane of the heating film is substantially consistent with a sheet-like extension plane of the natural graphite.

3. The heating film according to claim 1 or 2, wherein the heating film has a carbon content greater than or equal to 99%.

4. The heating film according to any one of claims 1 to 3, wherein the heating film has power ranging from 15 W to 10,000 W.

5. The heating film according to claim 4, wherein the heating film satisfies at least one of the following conditions:
the thermal diffusivity of the heating film ranges from 50 m²/s to 200 m²/s, and the power of the heating film ranges from 15 W to 5,000 W;
the thermal diffusivity of the heating film ranges from 200 m²/s to 300 m²/s, and the power of the heating film ranges from 60 W to 7,000 W; or
the thermal diffusivity of the heating film ranges from 300 m²/s to 450 m²/s, and the power of the heating film ranges from 100 W to 10,000 W.

6. The heating film according to any one of claims 1 to 5, wherein the heating film has a heating temperature ranging from 500°C to 1,700°C.

7. The heating film according to any one of claims 1 to 6, wherein a material of the heating film is graphite.

8. The heating film according to any one of claims 1 to 7, wherein the heating film comprises a plurality of heating units arranged sequentially in a length direction, adjacent heating units being arranged at an interval from each other and connected by a connection segment.

9. The heating film according to claim 8, wherein each of the plurality of heating units has a hollowed-out hole.

10. The heating film according to claim 8 or 9, wherein the heating film comprises a first heating segment and a second heating segment adjacent to each other in the length direction, wherein:
the first heating segment comprises multiple connected heating units , and the second heating segment comprises multiple adjacent heating units , a dimension of the multiple heating units corresponding to the first heating segment being smaller than a dimension of the multiple heating units corresponding to the second heating segment; and/or
the first heating segment and the second heating segment are arranged offset from each other in a width direction of the heating film.

11. The heating film according to any one of claims 8 to 10, wherein the heating film has a plurality of notches arranged at an interval in the length direction.

12. The heating film according to claim 11, wherein each of the plurality of notches is defined through separating a part of the heating film from the remaining part of the heating film and bending the part of the heating film.

13. A method for preparing the heating film according to any one of claims 1 to 12, the method comprising:
providing natural graphite, and performing an intercalation and oxidation treatment on the natural graphite to obtain an expandable graphite;
performing an expansion treatment on the expandable graphite to obtain an expanded graphite; and
performing calendering, a first heat treatment, and cutting on the expanded graphite to obtain the heating film.

14. The method according to claim 13, wherein:
the intercalation treatment is implemented by: performing intercalation on the natural graphite using concentrated sulfuric acid and/or hydrogen peroxide to obtain the expandable graphite; and
the expansion treatment is implemented by: introducing the expandable graphite into an expansion furnace and allowing the expandable graphite to expand at a temperature ranging from 850°C to 1,200°C to obtain the worm-like expanded graphite.

15. A heating tube, comprising a heating film according to any one of claims 1 to 12.

16. A heating appliance, comprising a heating tube according to claim 15.

17. The heating appliance according to claim 16, wherein the heating appliance is an electric oven, a microwave oven, a steam oven, an electric kettle, an electric blanket, an electric heater, an electric warmer, a bath heater, an electric ceramic cooker, or a disinfection cabinet.
